# FASCICULE DE BREVET EUROPEEN

(11) **EP 1 424 316 B1**
(45) Date de publication et mention de la délivrance du brevet: **03.01.2007**
(21) Numéro de dépôt: 03292809.5
(22) Date de dépôt: 10.11.2003
(51) Int. Cl.: C03C 25/50

(54) **Procédé de fabrication d'une fibre optique à revetements de natures distinctes**
Verfahren zur Herstellung einer optischen Faser mit Beschichtungen unterschiedlicher Natur
Method for manufacturing an optical fibre with coatings of a distinct nature

(30) Priorité: 28.11.2002 FR 0214935
(43) Date de publication de la demande: 02.06.2004
(73) Titulaire: Draka Comteq B.V., 1021 JZ Amsterdam (NL)
(72) Inventeur: Cottevieille, Denis, 93100 Montreuil Sous Bois (FR); Cariou, Frédéric, 91380 Chilly Mazarin (FR); Andrieu, Xavier, 91220 Bretigny Sur Orge (FR)
(74) Mandataire: Blokland, Arie

(56) Documents cités:
- EP-A- 0 516 438
- US-A- 4 690 503
- US-A- 4 778 244
- PATENT ABSTRACTS OF JAPAN vol. 010, no. 266 (P-496), 11 septembre 1986 (1986-09-11) & JP 61 091610 A (SHOWA ELECTRIC WIRE & CABLE CO LTD), 9 mai 1986 (1986-05-09)
- FUMIO YAMAMOTO: "JACKETING OF OPTICAL FIBERS WITH ORDERED THERMOTROPIC LIQUID CRYSTAL POLYESTERS" MOLECULAR CRYSTALS AND LIQUID CRYSTALS (INC. NONLINEAR OPTICS ), GORDON AND BREACH SCIENCE PUBLISHERS, READING, GB, vol. 153, no. PART A, 1 décembre 1987 (1987-12-01), pages 423-450, XP000000791

## Description

L'invention concerne le domaine des fibres optiques.

Plusieurs méthodes ont été développées pour permettre l'enrobage du matériau de coeur et de la gaine, d'une fibre optique, dans un matériau de revêtement leur conférant des propriétés spécifiques, comme par exemple la robustesse, la flexibilité ou la protection contre des environnements hostiles.

Parmi ces méthodes, il a notamment été proposé un enrobage constitué d'une première partie de revêtement en résine photoréticulable à faible module d'élasticité, généralement à base d'acrylique, et d'une seconde partie de revêtement à haut module d'élasticité généralement de même nature que la première partie de revêtement et intimement liée à celle-ci.

Ces résines photoréticulables présentent une cinétique de réticulation élevée qui permet d'obtenir des vitesses d'enrobage de l'ordre de 2000 m/mn. Cependant, ces résines photoréticulables n'offrent qu'un choix relativement limité de propriétés spécifiques. En outre, ces résines devant être déposées par enduction à des températures relativement basses, typiquement 90°C, et la température de fibrage d'une fibre optique étant de l'ordre de 1600°C, il est donc impératif que la fibre optique non revêtue fasse l'objet d'un refroidissement important en sortie du four de fibrage, ou en d'autres termes que la distance séparant le four de fibrage du dispositif de revêtement soit importante. Enfin, le coût de ces résines photoréticulables est élevé.

Il a par ailleurs été proposé d'adjoindre, par reprise, aux fibres optiques, munies de première et seconde parties de revêtement identiques, un revêtement complémentaire, appelé « buffer coating », constitué d'un polymère thermotropique cristal liquide (ou TLCP pour « Thermotropic Liquid Cristalline Polymer ») extrudé. Une telle fibre optique est notamment décrite dans les documents brevets US-4,778,244 et US-4,906,066 et JP-61091610 A. Ce type de revêtement (ou enrobage) permet de renforcer certaines propriétés spécifiques des fibres optiques, et notamment leur capacité à supporter des contraintes externes induites par les conditions d'installation et/ou d'utilisation. Mais cela ne suffit pas, notamment en regard de la grande variété de propriétés ou caractéristiques que requièrent les nombreuses applications des fibres optiques. De plus, l'opération d'adjonction du buffer coating s'effectue à une vitesse très lente, typiquement de l'ordre de 1 à 10 m/mn, qui est très éloignée de la vitesse habituelle de fabrication des fibres optiques.

L'invention a donc pour but de remédier à tout ou partie des inconvénients précités.

Elle propose à cet effet un procédé de revêtement de fibre optique, dans lequel on entoure le matériau de coeur en silice dopée et une gaine optique en silice d'un revêtement (ou enrobage) constitué d'une première partie de revêtement en résine photoréticulable, par exemple à base d'acrylique, et d'une seconde partie de revêtement réalisée par extrusion d'un polymère thermoplastique. Le polymère thermoplastique est mélangé à un additif constitué d'un polymère cristal liquide thermotropique.

Le polymère thermoplastique comprend un additif de type polymère cristal liquide thermotropique (ou TLCP). Le polymère cristal liquide thermotropique est de préférence choisi dans un groupe comprenant au moins les polyesters, et en particulier les polyesters totalement aromatiques, et les copolyesters aromatiques.

Préférentiellement, cet additif et le polymère thermoplastique sont préalablement mélangés à chaud selon des proportions choisies, de manière à constituer un alliage. La proportion d'additif est au plus égale à 10% en poids par rapport à l'alliage, préférentiellement comprise entre 2% et 10%, et de préférence encore égale à 5%.

Le polymère thermoplastique est de préférence choisi parmi le polyéthylène (PE), le polyamide (PA), et en particulier le polyamide 12 (PA 12) tel que le Rilsan A^{®} , comme par exemple l'ACNO TL^{®} et l'AMNO P40TLD^{®}

Cet alliage est ensuite préférentiellement refroidi puis granulé. Puis, les granulés sont préférentiellement séchés avant d'être extrudés, par exemple avec une extrudeuse comportant une filière à montage tubant.

Le procédé selon l'invention est tout particulièrement adapté, bien que de façon non exclusive, au revêtement de fibres optiques pour les télécommunications.

La présente invention a aussi pour objet une fibre optique constituée d'un coeur en silice dopée et d'une gaine optique en silice, dans laquelle ledit coeur et ladite gaine optique sont entouré d'un revêtement constitué d'une première partie de revêtement en résine photoréticulable, et d'une seconde partie de revêtement en polymère thermoplastique contenant un additif constitué d'un polymère cristal liquide thermotropique. Cette fibre optique est fabriquée par le procédé selon l'invention.

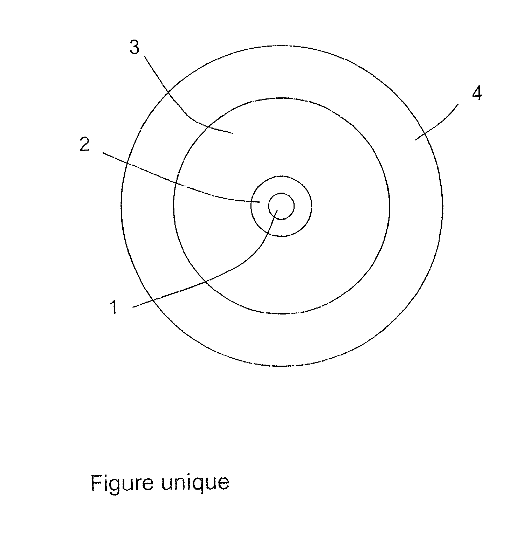

D'autres caractéristiques et avantages de l'invention apparaîtront à l'examen de la description détaillée ci-après, et du dessin annexé sur lequel l'unique figure illustre de façon schématique, dans une vue en coupe transversale, une fibre optique obtenue à l'aide d'un procédé de fabrication selon l'invention. Ce dessin pourra non seulement servir à compléter l'invention, mais aussi contribuer à sa définition, le cas échéant.

L'invention porte sur un procédé de revêtement d'une fibre optique constituée d'un coeur en silice dopée 1, dans lequel se propage la lumière, et d'une gaine optique 2 en silice. Ce procédé consiste à enrober ce coeur 1 et cette gaine optique 2 dans un matériau de revêtement constitué de deux parties 3 et 4.

Une première partie de revêtement (ou d'enrobage) 3, entourant la gaine optique 2, est réalisée par enduction d'une résine photoréticulable, à faible module d'élasticité. Il s'agit de préférence d'une résine à base d'acrylique dont le module d'élasticité est compris entre 1MPa et 10MPa, et plus préférentiellement égal à 1MPa.

Une seconde partie de revêtement (ou d'enrobage) 4 est réalisée par extrusion autour de la couche formant la première partie 3, d'un polymère thermoplastique, fusible, choisi en fonction des propriétés spécifiques requises. Ce polymère thermoplastique peut être par exemple du polyéthylène (PE), du polyamide (PA), et en particulier du polyamide 12 (PA 12) tel que le Rilsan A^{®} (comme par exemple l'ACNO TL^{®} ou de l'AMNO P40TLD^{®} commercialisés par ATOFINA), ou tout autre PA12 de grade équivalent comme par exemple l'Ultramid^{®} commercialisé par BASF ou le Vestamid^{®} commercialisé par Degussa AG.

La température d'extrusion est choisie en fonction du polymère thermoplastique utilisé. Néanmoins, cette température doit être supérieure à la température de fusion du polymère thermoplastique. Typiquement, on peut utiliser des températures comprises entre environ 180°C et environ 330°C. Cela permet de réduire notablement la distance nécessaire au refroidissement de la fibre optique entre les deux opérations de revêtement.

L'extrudeur est de préférence équipé d'une filière à montage tubant (ou « tubing die »). Une telle filière à montage tubant permet en effet de réaliser des enrobages très fins, typiquement compris entre environ 20µm et 100µm, sans génération de hautes pressions nuisibles pour la fibre.

Par ailleurs, le dénudage peut être réalisé à l'aide d'une pince à dénuder classique (pince Miller^{®} ).

Grâce à ce procédé de fabrication, le coût de fabrication d'une fibre optique peut être réduit d'environ 25% comparé au coût de fabrication des fibres optiques dont l'enrobage est constitué de deux parties de même nature, en résine photoréticulable, pour un aspect de surface équivalent et une vitesse de fabrication sensiblement équivalente. De plus, il est possible d'obtenir une bonne concentricité sans augmentation notable de l'atténuation du signal.

Afin de réduire les contraintes subies par le polymère thermoplastique pendant la phase d'extrusion, comme par exemple les contraintes de cisaillement et de DDR (pour « Draw Down Ratio » - rapport entre la section de la fibre en sortie de l'extrudeur et la section du revêtement), principalement induites par les vitesses de fabrication très élevées, il est avantageux de lui adjoindre un additif, qui agit comme un lubrifiant, de manière à constituer un alliage.

L'additif est constitué d'un polymère cristal liquide thermotropique (ou TLCP pour « Thermotropic Liquid Cristalline Polymer »).

Le polymère cristal liquide thermotropique (TLCP) est préférentiellement choisi parmi les polyesters, et en particulier les polyesters totalement aromatiques, les copolyesters aromatiques, et en particulier le Vectra^{®} (commercialisé par Hoechst Celanese), le Vectra LKX 1110^{®} et le Vectra A 950^{®}, et tout autre TLCP de grade équivalent y compris le Zenite^{®} (commercialisé par E.I Dupont de Nemours), le Sumikasuper^{®} et l'Ekonol^{®} (commercialisés par Sumitomo Chemical), le Rodrun^{®} (commercialisé par Unitika), et le Granlar^{®} (commercialisé par Grandmont).

La proportion d'additif, en poids, au sein de l'alliage est préférentiellement comprise entre 2% et 10%. Cette proportion varie en fonction du type de polymère thermoplastique utilisé et du type d'additif utilisé. Par exemple, on peut réaliser un alliage comportant 95% de PA 12 AMNO TLD^{®} et 5% de TCLP Vectra LKX1110^{®}. Dans cet exemple les proportions désignent les poids. D'autres exemples de mélange (ou alliage) peuvent être trouvés dans l'article de La Mantia F.P. dans Liquid Crystal Polymer Blend, Technomic, Lancaster, USA, chapter 4 (1993).

L'alliage est préférentiellement obtenu à chaud avant la phase d'extrusion, par exemple à l'aide d'un mélangeur bi-vis. L'alliage est ensuite refroidi, de préférence rapidement, avant d'être granulé. Les granulés sont ensuite préférentiellement séchés avant d'être extrudés comme indiqué précédemment.

Un tel alliage permet d'optimiser, notamment, le comportement rhéologique du polymère thermoplastique, et d'atteindre des vitesses de fabrication importantes, typiquement de l'ordre de 2000 m/mn. En outre, le TLCP induit une diminution de l'enthalpie de fusion de l'alliage qui permet de simplifier notablement le dispositif de refroidissement. En effet, l'alliage, de par ses propriétés, passe de l'état liquide à l'état solide sans avoir besoin-d'extraire beaucoup de calories, ce qui lui permet de se solidifier de façon quasi instantanée.

Ainsi, dans ce qui précède il a été décrit un alliage constitué à partir d'un polymère thermoplastique et d'un additif, constitué d'un polymère cristal liquide thermotropique. Mais, on peut envisager que l'alliage soit constitué d'un polymère thermoplastique et d'au moins deux additifs différents, comme par exemple des polymères cristal liquide thermotropique différents, de manière à lui conférer des propriétés spécifiques. On peut également envisager d'adjoindre au polymère thermoplastique un ou plusieurs colorants.

## Revendications

1. Procédé de revêtement d'une fibre optique constituée d'un coeur en silice dopée (1) et d'une gaine optique en silice (2), dans lequel on entoure ledit coeur (1) et ladite gaine optique (2) d'un revêtement constitué d'une première partie de revêtement (3) en résine photoréticulable, et d'une seconde partie de revêtement (4) réalisée par extrusion d'un polymère thermoplastique, **caractérisé en ce que** ledit polymère thermoplastique est mélangé à un additif constitué d'un polymère cristal liquide thermotropique.

2. Procédé selon la revendication 1, dans lequel ledit polymère thermoplastique est choisi dans un groupe comprenant au moins le polyéthylène, le polyamide.

3. Procédé selon la revendication 2, dans lequel ledit polymère thermoplastique est le polyamide 12.

4. Procédé selon l'une des revendications précédentes, dans lequel ledit polymère cristal liquide thermotropique est choisi dans un groupe comprenant au moins les polyesters, et en particulier les polyesters totalement aromatiques, et les copolyesters aromatiques.

5. Procédé selon l'une des revendications précédentes, dans lequel ledit additif et ledit polymère thermoplastique sont préalablement mélangés à chaud selon des proportions choisies de manière à constituer un alliage.

6. Procédé selon la revendication 5, dans lequel ladite proportion d'additif, en poids, est au plus égale à 10% du poids de l'alliage.

7. Procédé selon la revendication 6, dans lequel ladite proportion d'additif, en poids, est comprise entre 2% et environ 10%.

8. Procédé selon l'une des revendications 5 à 7, dans lequel ledit alliage est refroidi puis granulé.

9. Procédé selon la revendication 8, dans lequel lesdits granulés sont séchés avant d'être extrudés.

10. Procédé selon l'une des revendications précédentes, dans lequel ladite seconde partie de revêtement est extrudée avec une extrudeuse comportant une filière à montage tubant.

11. Procédé selon l'une des revendications précédentes, dans lequel ladite résine photoréticulable est à base d'acrylique.

12. Fibre optique fabriquée par le procédé selon la revendication 1, constituée d'un coeur en silice dopée et d'une gaine optique en silice, dans laquelle ledit coeur et ladite gaine optique sont entouré d'un revêtement constitué d'une première partie de revêtement en résine photoréticulable, et d'une seconde partie de revêtement en polymère thermoplastique contenant un additif constitué d'un polymère cristal liquide thermotropique.

13. Utilisation du procédé selon l'une des revendications 1 à 11, pour la réalisation de fibres optiques à double revêtement pour les télécommunications.

## Claims

1. Method of coating an optical fibre comprising a core of doped silica (1) and an optical cladding of silica (2), wherein said core (1) and said optical cladding (2) are surrounded by a coating comprising a first portion of coating (3) of photocrosslinkable resin and a second portion of coating (4) produced by extrusion of a thermoplastic polymer, **characterised in that** said thermoplastic polymer is admixed with an additive comprising a thermotropic liquid crystal polymer.

2. Method according to claim 1, wherein said thermoplastic polymer is selected from a group comprising at least polyethylene and polyamide.

3. Method according to claim 2, wherein said thermoplastic polymer is polyamide 12.

4. Method according to one of the preceding claims, wherein said thermotropic liquid crystal polymer is selected from a group comprising at least polyesters, and especially wholly aromatic polyesters, and aromatic copolyesters.

5. Method according to one of the preceding claims, wherein said additive and said thermoplastic polymer are previously mixed in the hot state in proportions selected so as to form an alloy.

6. Method according to claim 5, wherein said proportion of additive, by weight, is at most equal to 10 % of the weight of the alloy.

7. Method according to claim 6, wherein said proportion of additive, by weight, is between 2 % and about 10 %, inclusive.

8. Method according to one of claims 5 to 7, wherein said alloy is cooled and then granulated.

9. Method according to claim 8, wherein said granules are dried before being extruded.

10. Method according to one of the preceding claims, wherein said second portion of coating is extruded using an extruder having a tube-forming die fitting.

11. Method according to one of the preceding claims, wherein said photocrosslinkable resin is acrylic-based.

12. Optical fibre produced by the method according to claim 1, comprising a core of doped silica and an optical cladding of silica, wherein said core and said optical cladding are surrounded by a coating comprising a first portion of coating of photocrosslinkable resin and a second portion of coating of a thermoplastic polymer comprising an additive comprising a thermotropic liquid crystal polymer.

13. Use of the method according to one of claims 1 to 11 in the manufacture of double-coated optical fibres for telecommunications.

## Patentansprüche

1. Verfahren zur Umhüllung einer optischen Faser, die aus einem Kern aus dotiertem Siliciumdioxid (1) und einem optischen Mantel aus Siliciumdioxid (2) besteht, bei dem man den Kern (1) und den optischen Mantel (2) mit einer Umhüllung umgibt, die aus einem ersten Umhüllungsteil (3) aus fotovernetzbarem Harz und einem zweiten Umhüllungsteil (4), der durch Extrusion eines thermoplastischen Polymers hergestellt wird, besteht, **dadurch gekennzeichnet , dass** das thermoplastische Polymer mit einem Additiv vermischt wird, das aus einem thermotropen flüssigkristallinen Polymer besteht.

2. Verfahren nach Anspruch 1, wobei das thermoplastische Polymer aus der Gruppe, umfassend wenigstens Polyethylen, Polyamid, ausgewählt wird.

3. Verfahren nach Anspruch 2, wobei das thermoplastische Polymer Polyamid 12 ist.

4. Verfahren nach einem der vorangehenden Ansprüche, wobei das thermotrope flüssigkristalline Polymer aus einer Gruppe ausgewählt wird, die wenigstens Polyester und insbesondere vollständig aromatische Polyester und aromatische Copolyester umfasst.

5. Verfahren nach einem der vorangehenden Ansprüche, wobei das Additiv und das thermoplastische Polymer vorab in der Wärme entsprechend gewählter Verhältnismengen derart vermischt werden, dass eine Legierung gebildet wird.

6. Verfahren nach Anspruch 5, wobei der Additiv-Verhältnisanteil, als Gewicht, höchstens gleich 10% des Gewichts der Legierung ist.

7. Verfahren nach Anspruch 6, wobei der Additiv-Verhältnisanteil, als Gewicht, zwischen 2% und etwa 10% liegt.

8. Verfahren nach einem der Ansprüche 5 bis 7, wobei die Legierung gekühlt, dann granuliert wird.

9. Verfahren nach Anspruch 8, wobei das Granulat getrocknet wird, bevor es extrudiert wird.

10. Verfahren nach einem der vorangehenden Ansprüche, wobei der zweite Umhüllungsteil mit einem Extruder extrudiert wird, der eine Düse mit Rohraufbau enthält.

11. Verfahren nach einem der vorangehenden Ansprüche, wobei das fotovernetzbare Harz auf Acrylgrundlage ist.

12. Optische Faser, die durch das Verfahren nach Anspruch 1 hergestellt ist, bestehend aus einem Kern aus dotiertem Siliziumdioxid und einem optischen Mantel aus Siliziumdioxid, in dem der Kern und der optische Mantel von einer Umhüllung umgeben sind, die aus einem ersten Umhüllungsteil aus fotovernetzbarem Harz und einem zweiten Umhüllungsteil aus thermoplastischem Polymer, das ein Additiv enthält, das aus einem thermotropen flüssigkristallinen Polymer besteht, besteht.

13. Verwendung des Verfahrens nach einem der Ansprüche 1 bis 11 für die Herstellung von optischen Fasern mit doppelter Umhüllung für das Fernmeldewesen.
